# EUROPEAN PATENT SPECIFICATION

(11) **EP 2 111 778 B1**
(45) Date of publication and mention of the grant of the patent: **22.12.2010**
(21) Application number: 08382015.9
(22) Date of filing: 21.04.2008
(51) Int. Cl.: A47J 31/36

(54) **Dispenser group for a coffee maker**
Abgabeanordnung für Kaffeemaschinen
Groupe de distributeur pour machine à café

(43) Date of publication of application: 28.10.2009
(73) Proprietor: Celaya, Emparanza Y Galdos Internacional, S.A., 01013 Vitoria Alava (ES)
(72) Inventor: Moreno Jordana, Luis, 50008, Zaragoza (ES)
(74) Representative: ZBM Patents

(56) References cited:
- EP-A- 1 502 530
- WO-A-2007/042588
- DE-U1-202006 002 678

## Description

The invention relates to a dispenser group for a coffee maker, comprising an upper part, a piston inside the upper part, and a lever pivotally fixed to the upper part, the piston comprising at least one guide with which a moving part of the lever can be engaged, and also relates to a coffee maker comprising such a dispenser group.

In the following description, when reference is made to "a coffee", it is to indicate a beverage brewed with coffee powder (packed or unpacked).

### BACKGROUND ART

There exist coffee makers which comprise a brewing chamber defined jointly by a piston and a coffee holder that are joined when the piston is driven to press a coffee dose; said coffee dose may be in the form of a cartridge or may just be loose coffee powder. Some of these coffee makers have a lever for driving the piston.

For example, patent application US2005/0160919A1 discloses a coffee dispenser group having a brewing device which comprises a brewing chamber constituted by an upper and a lower brewing chamber portion. The lower brewing chamber portion includes a chamber for receiving the coffee powder portion, and the upper brewing chamber portion includes a closure element for closing the chamber in the lower brewing chamber portion. The upper brewing chamber portion comprises an inner element provided with the closure element, and an outer element coaxially disposed and axially movable with regard to the inner element. The lower brewing chamber portion is adapted to be fixed to the outer element of the upper brewing chamber portion. The outer element of the upper portion comprises a pivotal operating lever connected to the inner element of the upper brewing chamber portion by an actuating member disposed eccentrically to the axis of rotation of the lever to cause an axial relative movement between the inner element and the outer element of the upper brewing chamber portion upon pivoting the operating lever.

In such a device the inner element of the upper brewing chamber portion has a groove adapted for being engaged with the operating lever, so that said inner element can be driven by the operating lever, and the outer element of the upper brewing chamber portion has a slot to let the operating lever reach the groove on the inner element. This complicates the manufacture of the brewing device and makes the arrangement of the operating lever somewhat cumbersome.

Document DE-U-202006002678 discloses a dispenser group according to the preamble of independent claim 1.

### SUMMARY OF THE INTENTION

It is an object of the present invention to provide a dispenser group for a coffee maker which is easy to handle and to manufacture.

According to one aspect of the invention, the guide for the moving part of the lever is provided on an inner wall of the piston. In this way there is no need of a slot in the upper part because the lever directly reaches the piston inside thereof. Besides, the lever is easy to arrange and to handle because the access to the inside of the piston is unimpeded.

In an embodiment, the piston is substantially contained in the upper part, so that the dispenser group can have a compact design.

In an embodiment, the piston's guide is arcuate. In this way the lever can transmit a smooth movement to the piston.

In an embodiment, the piston comprises two said guides on different inner walls thereof and the moving part of the lever can be engaged with both guides. This contributes to the robustness of the mechanism.

In an embodiment, the upper part has an opening through which a lower part can be slidably inserted and extracted, partially o totally, in a direction which is substantially perpendicular to that of the movement of the piston. Therefore the lower part of the dispenser group can be horizontally displaced.

In an embodiment, the lower part comprises a seat for placing a coffee dose, and the upper part comprises a seal externally fixed to the bottom of the piston, such that, when the lower part is inserted in the upper part and the piston is lowered by means of the lever, the bottom of the piston and the seat for the coffee dose form a sealed chamber for brewing the coffee.

In an embodiment, the seal comprises at least one elastic protrusion, protruding downwardly, for ejecting the coffee dose after the brewing of a coffee.

In an embodiment, the seat can house a detachable filter which can contain a coffee dose.

In an embodiment, said opening for the lower part comprises stopping means for preventing the lower part from being detached from the upper part, in order to avoid that the lower part may fall to the floor.

In an embodiment, the dispenser group comprises a spring that pushes the lever when the latter is in a raised position, in order to keep it in such raised position. Said spring can be moved out of the path of the lever when the latter is lowered, so that by exerting a sufficient downwards force to the lever the spring no longer impedes its lowering.

Advantageously, during the lowering of the lever, an arm of the lever housing the moving part abuts an abutment in the piston when the line joining the axes of the rotation shaft and the traction shaft is negatively tilted, by preferably 1°, with respect to the vertical axis. In this way, the pressure generated during the brewing of a coffee cannot raise the lever. The angular sense of lowering the lever is considered to be the negative sense and the angular sense of raising the lever is considered to be the positive sense.

In an embodiment, said moving part of the lever is a shaft.

According to another aspect of the invention, a coffee maker comprises a dispenser group having one or more of the features specified in the previous paragraphs of this section.

### BRIEF DESCRIPTION OF THE DRAWINGS

Some particular embodiments of the present invention will be described in the following, only by way of non-limiting example, with reference to the appended drawings, in which:
figure 1 is a perspective view of a dispenser group according to a first embodiment;
figure 2 is a cross-section view taken across the A-A plane of figure 1;
figure 3 is a perspective view similar to that of figure 1 but with the dispenser group of the fist embodiment in a different condition;
figure 4 is a cross-section view taken across the A-A plane of figure 3;
figure 5 is a perspective view of an upper part of said first embodiment;
figure 6 is a perspective view of a lower part of the first embodiment;
figure 7 is a perspective view of a lever of the first embodiment;
figure 8 is an exploded perspective view of a piston of the first embodiment;
figure 9 is a bottom view of said piston;
figure 10 is a perspective view of a dispenser group according to a second embodiment;
figure 11 is a cross-section view taken across the A-A plane of figure 10;
figure 12 is a perspective view similar to that of figure 10 but with the dispenser group of the second embodiment in a different condition;
figure 13 is a cross-section view taken across the A-A plane of figure 12;
figure 14 is a perspective view of an upper part of said second embodiment;
figure 15 is a perspective view of a lower part of the second embodiment;
figure 16 is a vertical cross-section view of the lower part of figure 15;
figure 17 is a perspective view of a lever of the second embodiment;
figure 18 is an exploded perspective view of the lever and a piston of the second embodiment; and
figure 19 is a vertical cross-section view of the lever and piston of figure 18.

The following references are used in these drawings:
1; 1' - Upper part
1.1; 1'.1 - Cavity
1.2 - Stopper
1.3; 1'.3 - Guides
1.4; 1'.4 - Holes
1.5; 1'.5 - Bearing
1.6 - Opening
2 - Lower part
2' - Lower part + filter
2.1 - Annular surface
2.2 - Handle
2.3 - Apertures
2.4 - Protrusions
2.5 - Cylindrical wall
2.6 - Opposing ends
2.7 - Central hole
3 - Filter
3.1 - Cavity
3.2 - Handle
4; 4' - Piston
4.1; 4'.1 - Inlet
4.2; 4'.2 - Abutment
4.3; 4'.3 - Guide
4.4 - Bolt
4.5 - Outlet
4.6 - Bottom portion
4.7 - Groove
4.8 - Star-shaped ridge
5; 5' - Seal
6; 6' - Traction shaft
7; 7' - Lever
7.1; 7'.1 - First bore
7.2; 7'.2 - Second bore
8; 8' - Rotation shaft
9 - Sprayer
10 - Torsion spring
10.1 - Leg
11 - O-rings
12 - Foam generating valve
13 - Spring seat/pressure regulator

### DESCRIPTION OF PARTICULAR EMBODIMENTS

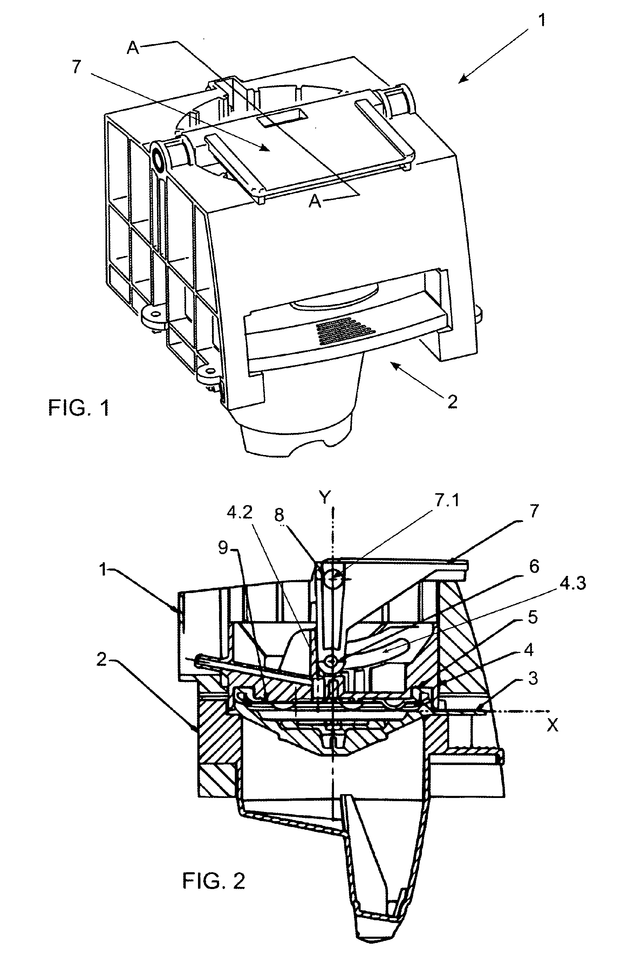

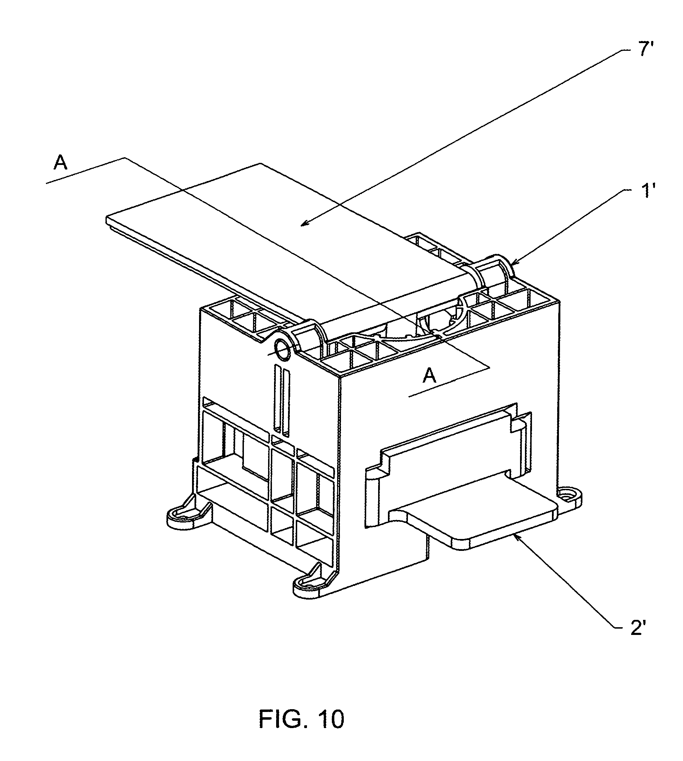

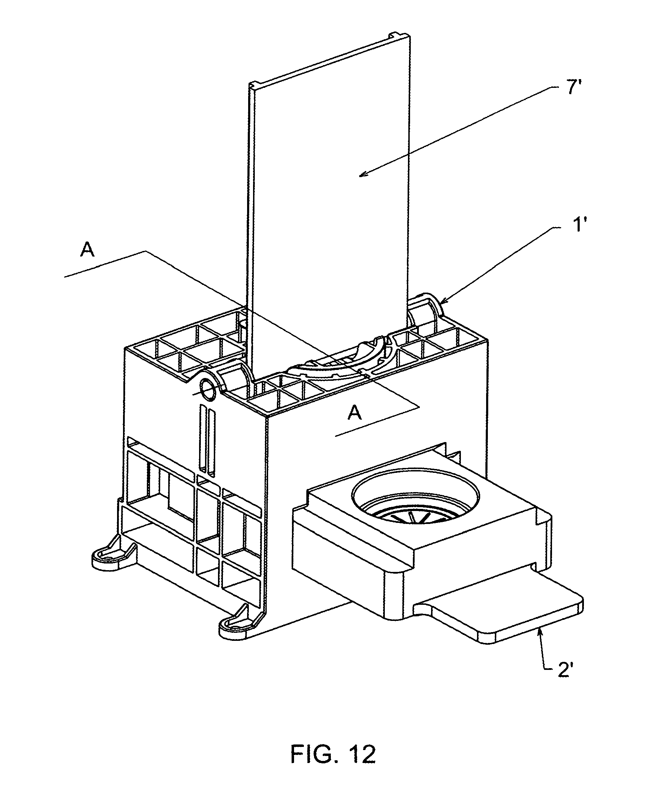

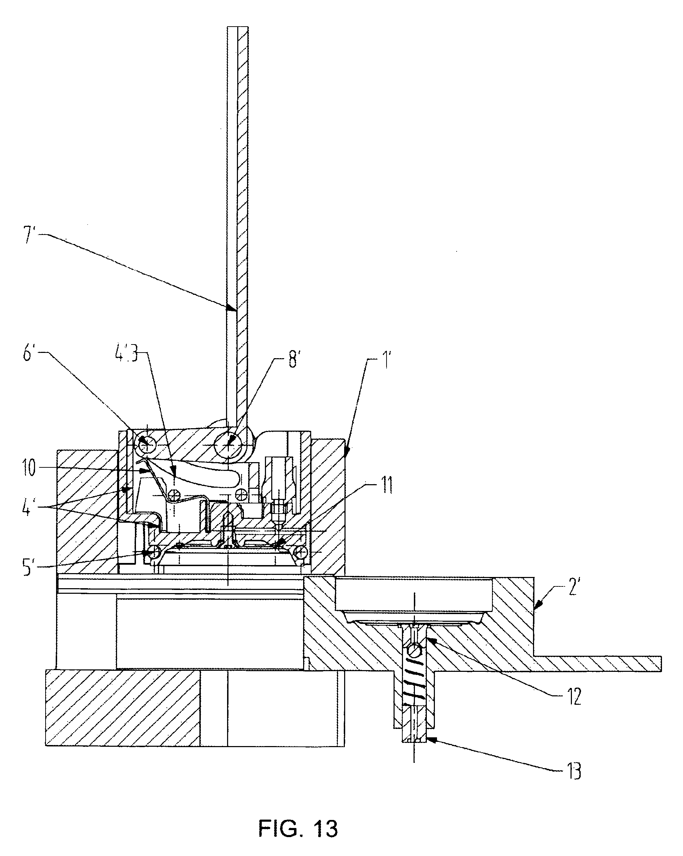

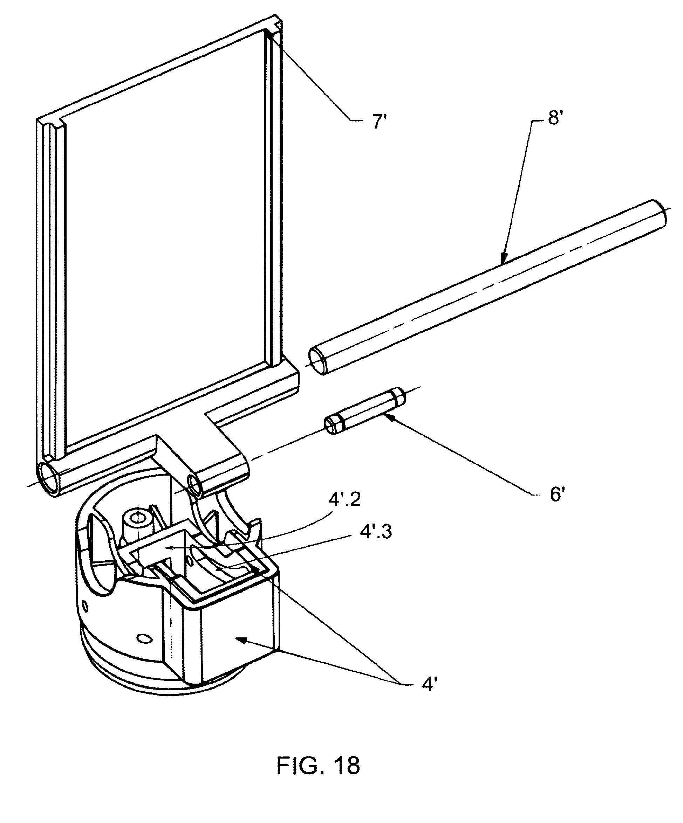

A first embodiment of the invention is represented in figures 1 to 9, while a second embodiment is represented in figures 10 to 19. As can be seen in figure 1, a dispenser group for a coffee maker according to said first embodiment comprises an upper part 1 that can be fixed to the coffee maker, a lower part 2 that can be inserted in and extracted from the upper part 1, and a lever 7 that is pivotally fixed to the upper part 1, i.e., that can have only a rotational movement with respect to the upper part 1.

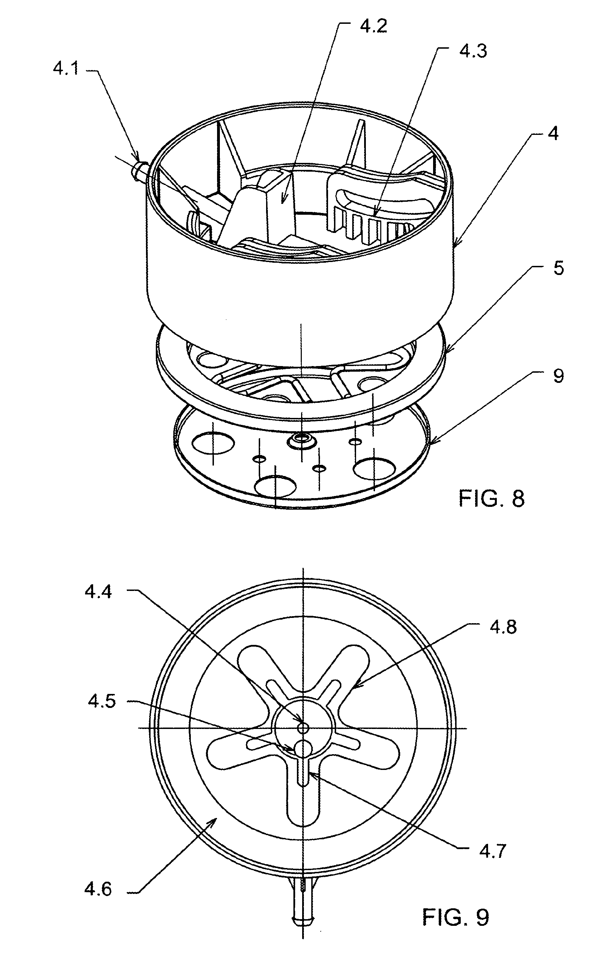

The upper part 1 contains a piston 4 (figure 2) which can move axially inside the upper part 1. The movement for insertion and extraction of the lower part 2 is substantially perpendicular to the movement of the piston 4. The piston 4 has a couple of opposite grooves 4.3 (figure 8) provided on corresponding inner walls thereof.

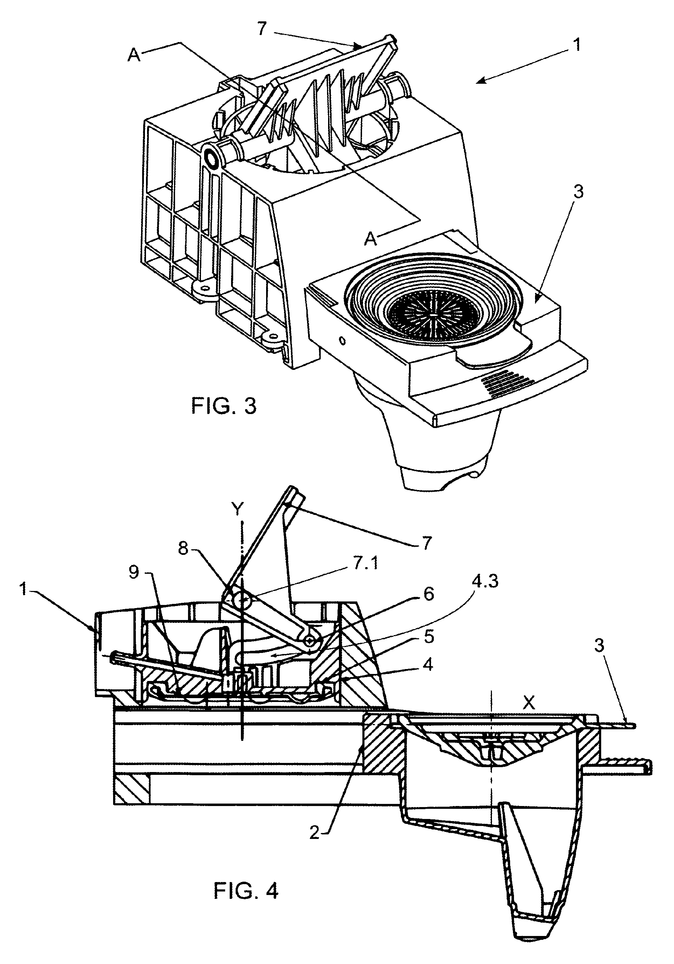

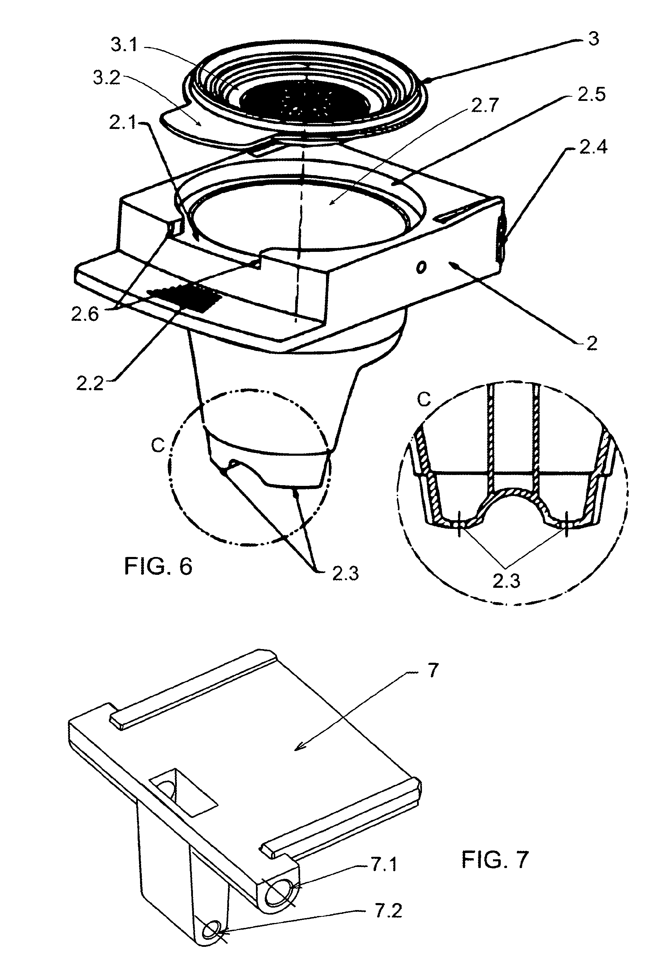

The lever 7 (figure 7) comprises a first bore 7.1 in a first arm and a second bore 7.2 in a second arm of the lever, the first arm being the one the user acts on. The first bore 7.1 houses a rotation shaft 8, whose axis is coincidental with the rotation axis of the lever, and the second bore 7.2 houses a traction shaft 6. The traction shaft 6 is intended to push the piston 4 down when the lever is lowered (figure 2) and to pull the piston 4 up when the lever is raised (figure 4), in a way explained in the next paragraph.

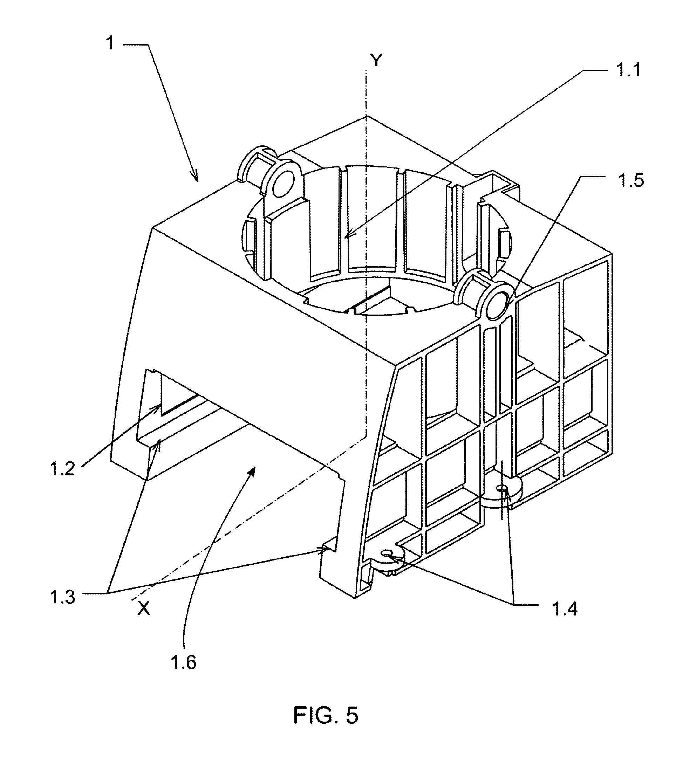

The upper part 1 (figure 5) comprises two bearings 1.5 for pivotally receiving the rotation shaft 8 of the lever 7, and a cavity 1.1 for slidably housing the piston 4. The axes of the bearings 1.5 are coincidental with each other and also with the rotation axis of the lever 7. The bearings 1.5 are located in the top portion of the upper part 1. The grooves 4.3 of the piston 4 do not follow a circumference centred on the rotation axis 7.1 (figures 2 and 4). The traction shaft 6 of the lever 7 is engaged at both ends with the grooves 4.3 of the piston 4, so that upon rotation of the lever 7 the traction shaft 6 travels along the grooves 4.3, thereby forcing the piston 4 to move axially inside the upper part 1.

The piston 4 is provided with an abutment 4.2 (fig.8) for stopping the downwards rotation of the lever 7 by abutting against the second arm of the lever. There is a risk that the pressure generated during the brewing of a coffee could raise the lever 7 to the position of figures 3 and 4. To avoid this, the second arm of the lever abuts the abutment 4.2 when the line joining the axes of the rotation shaft 8 and the traction shaft 6 is negatively tilted, by for example 1° with respect to vertical axis Y (figure 2), the angular sense of lowering the lever 7 being considered the negative sense and the angular sense of raising the lever 7 being considered the positive sense.

The upper part 1 comprises several holes 1.4 (fig.5) for fastening the dispenser group to the coffee maker. The upper part 1 also comprises an opening 1.6 for slidably receiving the lower part 2. The opening 1.6 comprises two opposing guides 1.3, on which the lower part 2 can slide, and two corresponding stoppers 1.2 for preventing the complete extraction of the lower part 2 from the opening 1.6.

The lower part 2 (figure 6) comprises a central hole 2.7 and a horizontal annular surface 2.1 surrounding said central hole 2.7. A filter 3 can be placed on the annular surface 2.1, which is a seat for said filter 3. A cylindrical wall 2.5, which surrounds the annular surface 2.1, encloses and centres the filter 3. The vertical wall 2.5 is interrupted by a front opening arranged between two opposing ends 2.6 of the vertical wall 2.5. The filter 3 is provided with a cavity 3.1 for housing a coffee dose (which may be a cartridge or just loose coffee powder) and with a handle 3.2 in order to be held by the user's fingers. Said handle 3.2 can be fitted between the ends 2.6 so as to prevent the filter 3 from rotating around the annular surface 2.1.

The lower part 2 also comprises two corresponding protrusions 2.4 which abut against two stoppers 1.2 of the opening 1.6 of the upper part 1, thus preventing the lower part 2 from being detached from the upper part 1, although further means may be provided for detaching the lower part 2 from the upper part 1, for example by pressing the side walls of the lower part 2. The lower part 2 also comprises a handle 2.2 having a function which is analogous to that of the handle 3.2 of the filter 3, and two bottom apertures 2.3 for delivering the brewed coffee.

Referring now to figures 8 and 9, the piston 4 comprises an inlet 4.1 through which hot pressurized water is fed to a brewing chamber, an outlet 4.5 for said hot water, and a duct between inlet 4.1 and outlet 4.5. A sprayer 9 is arranged under the water outlet 4.5 and an elastic seal 5 is placed between the sprayer 9 and a bottom portion 4.6 of the piston 4. Surrounding said outlet 4.5 several grooves 4.7 contribute to distribute the hot water to the sprayer holes.

The bottom portion 4.6 surrounds the outlet 4.5 and also a star-shaped ridge 4.8 which contributes to centring the seal 5 by virtue of corresponding recesses provided thereon. The star-shaped ridge 4.8 encloses the grooves 4.7. The sprayer 9 and the seal 5 are both fastened to the piston 4 by means of a bolt 4.4.

The dispenser group can be in a closed condition (represented in figures 1 and 2) and in an open condition (represented in figures 3 and 4). When the lever 7 is lowered, and the lower part 2 has been inserted, the piston 4 is brought to press a coffee dose placed in the filter 3 and, through the seal 5, defines a brewing chamber with said filter 3. After a coffee has been brewed the lever 7 can be raised, thereby undoing the cooperation between the piston 4 and the filter 3 and unmaking the brewing chamber, so that the lower part 2 can be extracted, the filter 3 can be cleaned and a new coffee dose can be placed therein. The seal 5 is provided with some downward elastic protrusions that help to detach the coffee dose from the bottom of the piston 4.

Of course the lower part 2 has to be inserted before lowering the lever 7 for brewing a coffee, and the hot water has to be supplied after the lever 7 has been lowered.

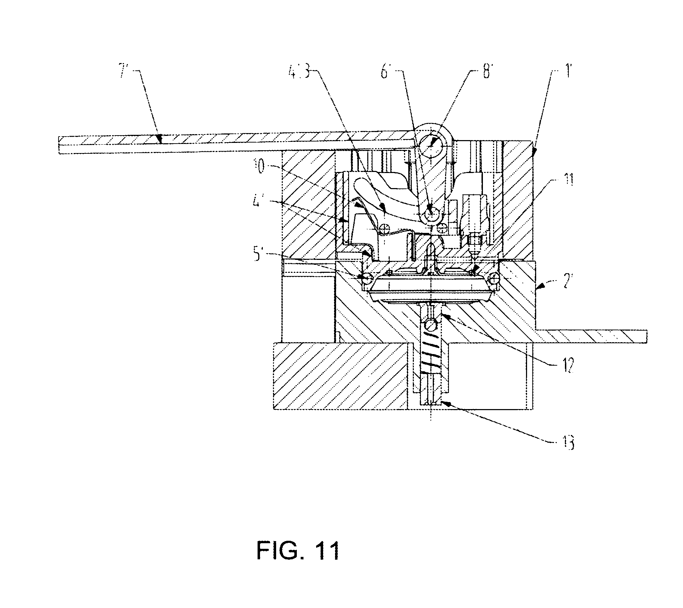

Figures 10 to 19 show a second embodiment of the present invention. Corresponding elements have been referenced with the same numeral with a prime added. The two embodiments are similar, the main difference being, besides some different shapes and sizes, that the second embodiment comprises four elements which are absent from the first embodiment: a torsion spring 10, a sealing O-ring 11, a foam generating valve 12 and a spring seat/pressure regulator 13 that can be fixed or manually adjusted; they can be seen in figures 11, 13, 16 and 19.

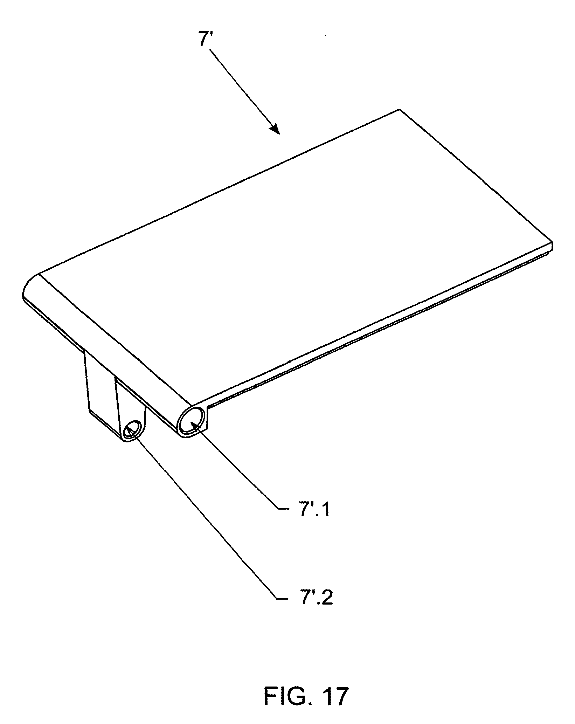

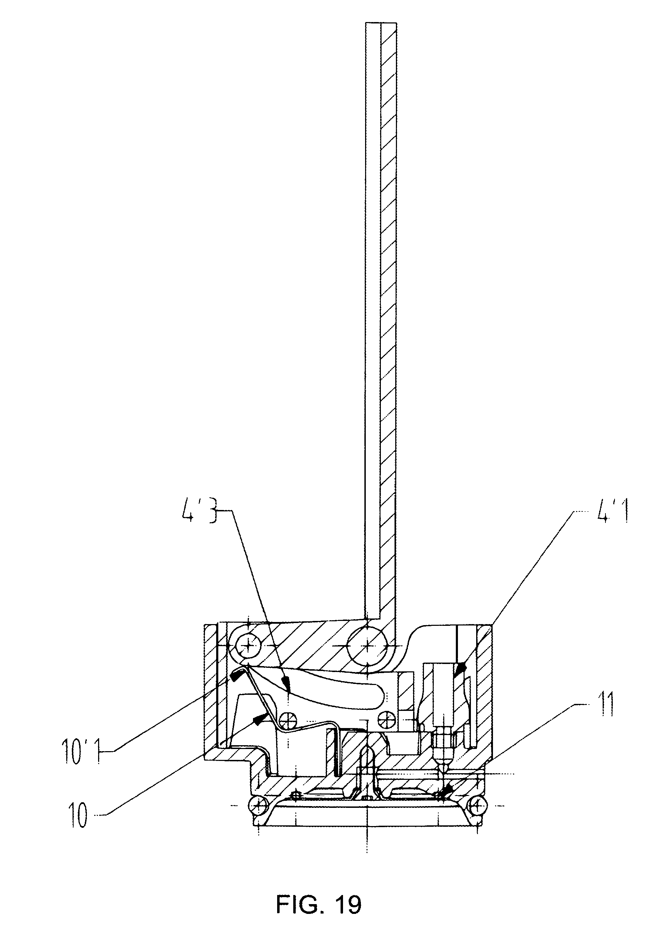

When the lever 7' is in a raised position (fig. 19), a leg 10.1 of the torsion spring 10 pushes said lever up through the shorter second arm of the latter, which is the arm comprising the second bore 7'.2 (fig. 17), in order to keep said raised position, so that to lower the lever it is necessary to exert force enough to move said leg 10.1 out of the path of said second arm of the lever 7'.

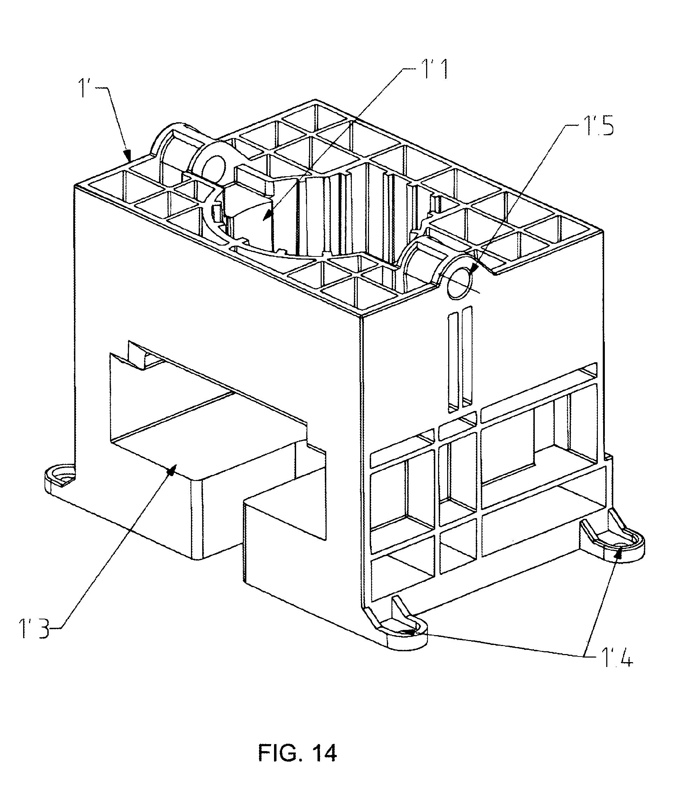

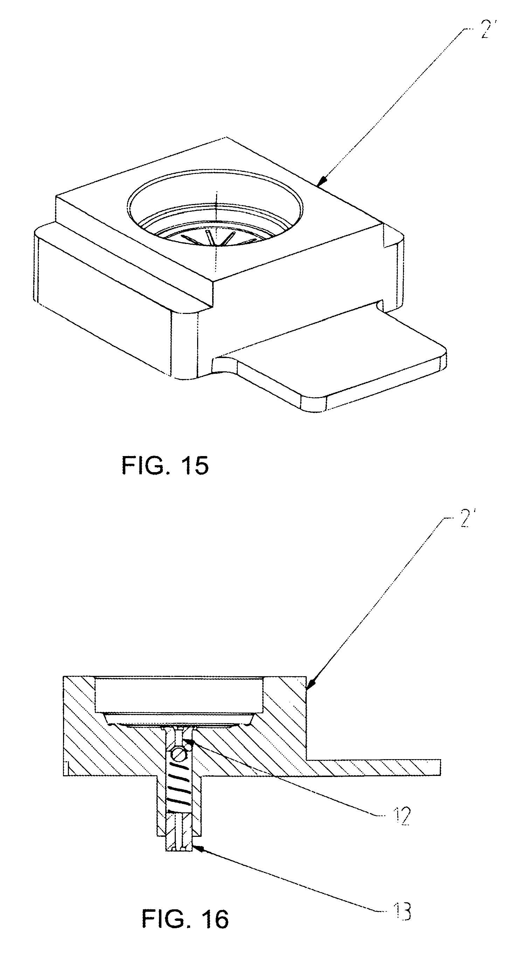

In this second embodiment, the lower part 2' can be totally extracted from the upper part 1' (there are no stoppers for preventing the complete extraction of the lower part, see figures 14 and 15). There is no separate filter in the second embodiment, either, because it is not intended to use the dispenser group of the second embodiment with unpacked coffee, but only with packed coffee, preferably in the form of hard monodose pods, in which the coffee is hard-pressed (the filter of the first embodiment is prepared to house both packaged and unpackaged coffee, the former as soft pods; alternatively, different filters can be used depending on whether the coffee is packed or unpacked).

The first embodiment (figures 1-9) of the dispenser group is intended for coffee makers working at relatively low pressure (less than 5 bars), while the second embodiment (figures 10-19) is intended for coffee makers working at high pressure (more than 5 bars).

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

For instance, the lower part 2,2' can be inserted in the upper part 1,1' either through the front wall or through the back wall.

## Claims

1. Dispenser group for a coffee maker, comprising an upper part (1; 1'), a piston (4; 4') inside the upper part, and a lever (7; 7') pivotally fixed to the upper part, the piston comprising at least one guide (4.3; 4'.3) with which a moving part (6; 6') of the lever can be engaged, **characterized in that** said guide is provided on an inner wall of the piston.

2. Dispenser group according to claim 1, wherein the piston (4; 4') is substantially contained in the upper part (1; 1').

3. Dispenser group according to claim 1 or 2, wherein said guide (4.3; 4'.3) is arcuate.

4. Dispenser group according to any of the preceding claims, wherein the piston (4; 4') comprises two said guides (4.3; 4'.3) on different inner walls thereof, and said moving part (6; 6') of the lever (7; 7') can be engaged with both guides.

5. Dispenser group according to any of the preceding claims, wherein the upper part (1; 1') has an opening (1.6; 1'.6) through which a lower part (2; 2') can be slidably inserted and extracted, in a direction which is substantially perpendicular to that of the movement of the piston (4; 4').

6. Dispenser group according to claim 5, wherein the lower part (2; 2') comprises a seat for placing a coffee dose.

7. Dispenser group according to claim 6, wherein the upper part (1; 1') comprises a seal (5; 5') externally fixed to the bottom of the piston (4; 4'), such that, when the lower part (2; 2') is inserted in the upper part and the piston is lowered by means of the lever (7; 7'), the bottom of the piston and the seat for the coffee dose form a sealed chamber for brewing the coffee.

8. Dispenser group according to claim 7, wherein the seal (5) comprises at least one elastic protrusion, protruding downwardly, for ejecting the coffee dose after the brewing of a coffee.

9. Dispenser group according to any of claims 6 to 8, wherein said seat can house a detachable filter (3) which can contain a coffee dose.

10. Dispenser group according to any of claims 5 to 9, wherein said opening (1.6) comprises stopping means (1.2) for preventing the lower part (2) from being detached from the upper part (1).

11. Dispenser group according to any of the preceding claims, which comprises a spring (10) that pushes the lever (7') up when the latter is in a raised position.

12. Dispenser group according to claim 11, wherein said spring (10) can be moved out of the path of the lever (7') when the latter is lowered.

13. Dispenser group according to any of the preceding claims, wherein, during the lowering of the lever (7; 7'), an arm of the lever housing the moving part (6; 6') abuts an abutment (4.2; 4'.2) in the piston (4; 4') when the line joining the axes of the rotation shaft (8; 8') and the traction shaft (6; 6') is negatively tilted, by preferably 1°, with respect to the vertical axis (Y).

14. Dispenser group according to any of the preceding claims, wherein said moving part (6; 6') of the lever (7; 7') is a shaft.

15. Coffee maker comprising a dispenser group according to any of claims 1 to 14.

## Patentansprüche

1. Abgabeanordnung für eine Kaffeemaschine mit einem Oberteil (1; 1'), einem Kolben (4; 4') im Innern des Oberteils, und einem Hebel (7; 7'), der drehbar am Oberteil befestigt ist, wobei der Kolben mindestens eine Leitvorrichtung (4.3; 4'.3) besitzt, in der ein bewegliches Bauteil (6; 6') des Hebels eingeklinkt werden kann, **dadurch gekennzeichnet, dass** die besagte Leitvorrichtung an einer Innenwand des Kolbens angebracht ist.

2. Abgabeanordnung nach Anspruch 1, bei der der Kolben (4; 4') im Wesentlichen im Oberteil (1; 1') aufgenommen wird.

3. Abgabeanordnung nach Anspruch 1 oder 2, bei der die besagte Leitvorrichtung (4.3; 4'.3) bogenförmig ist.

4. Abgabeanordnung nach einem der vorstehenden Ansprüche, bei der der Kolben (4; 4') zwei solche Leitvorrichtungen (4.3; 4'.3) auf verschiedenen Innenwänden desselben besitzt, und das besagte bewegliche Bauteil (6; 6') des Hebels (7; 7') in die beiden Leitvorrichtungen eingeklinkt werden kann.

5. Abgabeanordnung nach einem der vorstehenden Ansprüche, bei der das Oberteil (1; 1') eine Öffnung (1.6; 1'.6) hat, durch die ein Unterteil (2; 2') in einer Richtung, die im Wesentlichen senkrecht zu der der Kolbenbewegung (4; 4') steht, gleitend eingeführt und entnommen werden kann.

6. Abgabeanordnung nach Anspruch 5, bei der das Unterteil (2; 2') eine Aufnahme zum Einlegen einer Kaffeekapsel besitzt.

7. Abgabeanordnung nach Anspruch 6, wobei das Oberteil (1; 1') eine Dichtung (5; 5') besitzt, die von außen am Fuß des Kolbens (4; 4') angebracht ist, so dass der Kolbenfuß und die Kaffeekapselaufnahme, wenn das Unterteil (2; 2') in das Oberteil eingeführt wird und der Kolben mit Hilfe des Hebels (7; 7') heruntergefahren wird, eine abgedichtete Kammer zum Brühen des Kaffees bilden.

8. Abgabeanordnung nach Anspruch 7, bei der die Dichtung (5) mindestens einen elastischen nach unten überstehenden Vorsprung zum Auswerfen der Kaffeekapsel nach dem Brühen eines Kaffees besitzt.

9. Abgabeanordnung nach einem der Ansprüche 6 bis 8, bei dem die besagte Aufnahme einen herausnehmbaren Filter (3), der eine Kaffeedosis enthalten kann, aufnehmen kann.

10. Abgabeanordnung nach einem der Ansprüche 5 bis 9, bei der die besagte Öffnung (1.6) Stopvorrichtungen (1.2) besitzt, die vermeiden, dass das Unterteil (2) sich vom Oberteil (1) löst.

11. Abgabeanordnung nach einem der vorstehenden Ansprüche, die eine Feder (10) besitzt, die den Hebel (7') nach oben schiebt, wenn dieser letztere sich in einer erhobenen Position befindet.

12. Abgabeanordnung nach Anspruch 11, bei der die besagte Feder (10) aus dem Weg des Hebels (7') geräumt werden kann, wenn der letztere heruntergekippt wird.

13. Abgabeanordnung nach einem der vorstehenden Ansprüche, bei der während des Herunterkippens des Hebels (7; 7') ein Arm des Hebels, der das bewegliche Teil (6; 6') aufnimmt, an ein Widerlager (4.2; 4'.2) im Kolben (4 ; 4') stößt, wenn die Linie, die die Achsen der Rotationswelle (8; 8') und der Antriebswelle (6; 6') verbindet, bezüglich der senkrechten Achse (Y) negativ geneigt ist, und zwar vorzugsweise um 1°.

14. Abgabeanordnung nach einem der vorstehenden Ansprüche, bei der das besagte bewegliche Bauteil (6; 6') des Hebels (7; 7') eine Welle ist.

15. Kaffemaschine mit einer Abgabeanordnung nach einem der Ansprüche 1 bis 14.

## Revendications

1. Groupe distributeur pour une machine à café, comprenant une partie supérieure (1 ; 1'), un piston (4 ; 4') à l'intérieur de la partie supérieure, et un levier (7 ; 7') fixé de façon pivotante à la partie supérieure, le piston comprenant au moins un guide (4.3 ; 4'.3) avec lequel une partie mobile (6 ; 6') du levier peut être mise en prise, **caractérisé en ce que** ledit guide est fourni sur une paroi interne du piston.

2. Groupe distributeur selon la revendication 1, dans lequel le piston (4 ; 4') est sensiblement contenu dans la partie supérieure (1 ; 1').

3. Groupe distributeur selon la revendication 1 ou 2, dans lequel ledit guide (4.3 ; 4'.3) est curviligne.

4. Groupe distributeur selon l'une quelconque des revendications précédentes, dans lequel le piston (4 ; 4') comprend deux dits guides (4.3 ; 4'.3) sur différentes parois internes de celui-ci, et ladite partie mobile (6 ; 6') du levier (7 ; 7') peut être mise en prise avec l'un et l'autre guides.

5. Groupe distributeur selon l'une quelconque des revendications précédentes, dans lequel la partie supérieure (1 ; 1') a une ouverture (1.6 ; 1'.6) à travers laquelle une partie inférieure (2 ; 2') peut être insérée et extraite de manière coulissante, dans une direction qui est sensiblement perpendiculaire à celle du mouvement du piston (4 ; 4').

6. Groupe distributeur selon la revendication 5, dans lequel la partie inférieure (2 ; 2') comprend un siège destiné à placer une dose de café.

7. Groupe distributeur selon la revendication 6, dans lequel la partie supérieure (1 ; 1') comprend un joint (5 ; 5') fixé de façon externe au bas du piston (4 ; 4'), de telle sorte que, lorsque la partie inférieure (2 ; 2') est insérée dans la partie supérieure et que le piston est abaissé au moyen du levier (7 ; 7'), le bas du piston et le siège pour la dose de café forment une chambre scellée pour infuser le café.

8. Groupe distributeur selon la revendication 7, dans lequel le joint (5) comprend au moins une partie saillante élastique, faisant saillie vers le bas, pour éjecter la dose de café après l'infusion d'un café.

9. Groupe distributeur selon l'une quelconque des revendications 6 à 8, dans lequel ledit siège peut loger un filtre amovible (3) qui peut contenir une dose de café.

10. Groupe distributeur selon l'une quelconque des revendications 5 à 9, dans lequel ladite ouverture (1.6) comprend des moyens d'arrêt (1.2) pour empêcher la partie inférieure (2) de se détacher de la partie supérieure (1).

11. Groupe distributeur selon l'une quelconque des revendications précédentes, qui comprend un ressort (10) qui pousse le levier (7') vers le haut lorsque ce dernier est dans une position relevée.

12. Groupe distributeur selon la revendication 11, dans lequel ledit ressort (10) peut être déplacé hors de la trajectoire du levier (7') lorsque ce dernier est abaissé.

13. Groupe distributeur selon l'une quelconque des revendications précédentes, dans lequel, durant l'abaissement du levier (7 ; 7'), un bras du levier logeant la partie mobile (6 ; 6') vient contre une butée (4.2 ; 4'.2) dans le piston (4 ; 4') lorsque la ligne joignant les axes de l'arbre de rotation (8 ; 8') et de l'arbre de traction (6 ; 6') est inclinée négativement, de préférence de 1°, par rapport à l'axe vertical (Y).

14. Groupe distributeur selon l'une quelconque des revendications précédentes, dans lequel ladite partie mobile (6 ; 6') du levier (7 ; 7') est un arbre.

15. Machine à café comprenant un groupe distributeur selon l'une quelconque des revendications 1 à 14.
